# EUROPÄISCHE PATENTSCHRIFT

(11) **EP 0 685 975 B1**
(45) Veröffentlichungstag und Bekanntmachung des Hinweises auf die Patenterteilung: **23.07.2003**
(21) Anmeldenummer: 95106896.4
(22) Anmeldetag: 06.05.1995
(51) Int. Cl.: H04Q 9/00, H02J 15/00

(54) **Vorrichtung zur Stromversorgung eines fernbedienbaren Gerätes der Unterhaltungselektronik im Bereitschaftsbetrieb**
Power supply for an apparatus of the entertainment sector with remote control in stand-by mode
Appareil d'alimentation en électricité pour une télécommande d'électronique du spectacle entre de service de réserve

(30) Priorität: 03.06.1994 DE 4419581
(43) Veröffentlichungstag der Anmeldung: 06.12.1995
(73) Patentinhaber: GRUNDIG Aktiengesellschaft, 90471 Nürnberg (DE)
(72) Erfinder: König, Wolfgang, Grundig E.M.V., Max Grundig, D-90762 Fürth (DE)

(56) Entgegenhaltungen:
- DE-A- 3 804 874
- DE-A- 4 226 530
- US-A- 5 280 220

## Beschreibung

Die Erfindung betrifft eine Vorrichtung zur Stromversorgung eines fernbedienbaren Gerätes der Unterhaltungselektronik im Bereitschaftsbetrieb.

Es sind bereits Fernsehempfänger bekannt, die im Bereitschaftsbetrieb eine niedrige Leistungsaufnahme haben. So ist beispielsweise der Zeitschrift Funkschau 11/1994, S. 12, entnehmbar, daß die Fernsehgeräte 6355 VT und 7155 VT der Firma Nokia im Bereitschaftsbetrieb eine Leistungsaufnahme von 0,1 Watt aufweisen.

Aus der EP-A2-0 598 267, die ebenfalls auf die Firma Nokia zurückgeht, ist es bekannt, den Fernbedienempfangsdecoder im Bereitschaftsbetrieb durch ein vom Schaltnetzteil des Fernsehempfängers unabhängiges transformatorloses Bereitschaftsnetzteil mit geringen Wirkungsverlusten zu versorgen.

Aus der DE-A1-4 226 530 ist bereits ein Fernsehempfänger mit Infrarot-Fernbedienung bekannt, welcher im Standby-Betrieb völlig vom Netz getrennt ist und bei welchem die Standby-Stromversorgung mittels Solarzellen erfolgt

Ausgehend von diesem Stand der Technik liegt der Erfindung die Aufgabe zugrunde, einen Weg aufzuzeigen, wie bei einer Vorrichtung mit den im Oberbegriff des Anspruchs 1 angegebenen Merkmalen eine Wiedereinschaltung des Gerätes aus dem Bereitschaftsbetrieb erfolgen kann.

Diese Aufgabe wird bei einer Vorrichtung mit den im Oberbegriff des Anspruchs 1 angegebenen Merkmalen durch die im kennzeichnenden Teil des Anspruchs 1 angegebenen Merkmale gelöst. Vorteilhafte Weiterbildungen ergeben sich aus den abhängigen Patentansprüchen.

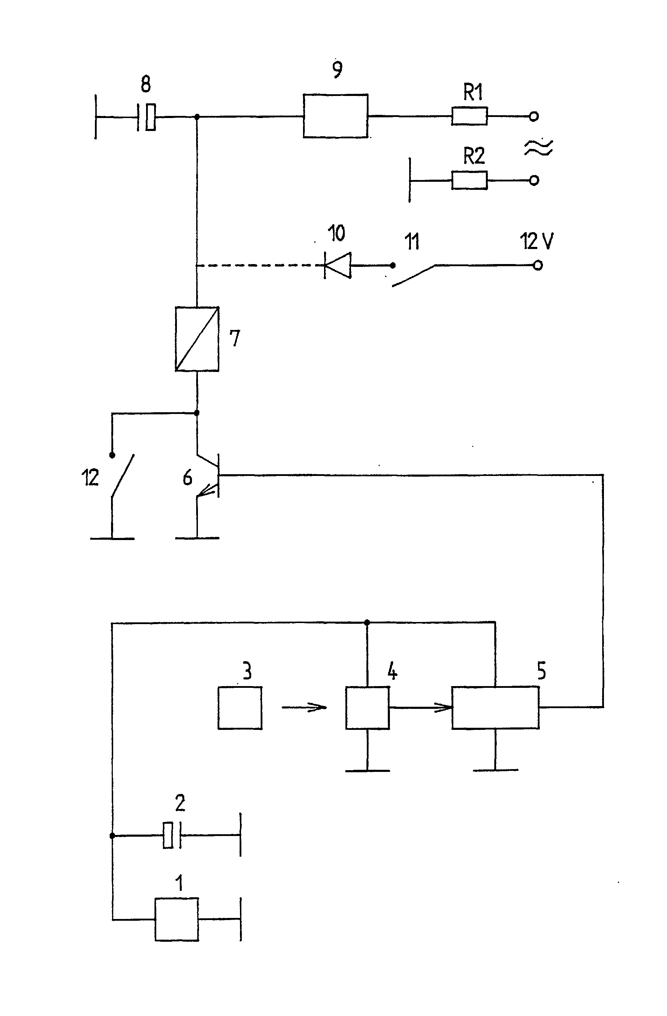

Die Vorteile der Erfindung bestehen insbesondere darin, daß während des Bereitschaftsbetriebes keinerlei Stromaufnahme aus dem Stromversorgungsnetz erfolgt. Weitere Vorteile der Erfindung ergeben sich aus der Erläuterung eines Ausführungsbeispiels anhand der Figur.

Diese zeigt eine in einem Fernsehempfänger angeordnete Vorrichtung zur Stromversorgung während des Bereitschaftsbetriebes. Diese Vorrichtung weist im einzelnen auf: ein Solar-Panel 1, einen ersten Energiespeicher 2, einen Fernbedienungsgeber 3, einen Fernbedienungsempfänger 4, eine Auswerteschaltung 5, einen Schalttransistor 6, ein Relais 7, einen zweiten Energiespeicher 8, eine Gleichrichterschaltung 9, an das Stromversorgungsnetz angeschlossene Widerstände R1 und R2, eine Diode 10, einen an eine Versorgungsgleichspannung angeschlossenen ersten Schalter 11 und einen zweiten Schalter 12.

Die gezeigte Vorrichtung arbeitet wie folgt:

Das Solar-Panel 1, dessen Fläche nur wenige Quadratzentimenter aufweisen muß, versorgt den ersten Energiespeicher 2, bei dem es sich vorzugsweise um einen Elektrolytkondensator oder einen Akku handelt, ständig mit Energie. Das Solar-Panel 1 ist nach einer bevorzugten Ausführungsform der Erfindung fest mit dem Gehäuse des Fernsehempfängers verbunden bzw. in dieses integriert. Alternativ dazu kann das Solar-Panel 1 aber auch in Form eines beweglichen Geräteeinschubes realisiert sein, welcher durch Herausziehen aus dem Gerätegehäuse und geeignetes Verdrehen den am Empfangsort herrschenden Lichtverhältnissen angepaßt werden kann. Weiterhin kann das Solar-Panel 1 auch durch ein Kabel mit dem Fernsehempfänger verbunden sein. Diese Ausführungsform hat den Vorteil, daß dann, wenn der Fernsehempfänger beispielsweise in eine Schrankwand eingebaut betrieben wird, das Solar-Panel 1 an einem geeigneten Platz außerhalb der Schrankwand aufgestellt werden kann, um die Stromversorgung des ersten Energiespeichers 2 sicherzustellen.

Während des Bereitschaftsbetriebes des Fernsehempfängers werden lediglich der Fernbedienungsempfänger 4 und die Auswerteschaltung 5, bei der es sich beispielsweise um einen Mikrocomputer oder eine stromsparende CMOS-Schaltung handelt, mit Energie versorgt. Alle anderen Bauteile des Fernsehempfängers verbrauchen im Bereitschaftsbetrieb keine Energie. Die Schalter 11 und 12 sind während des Bereitschaftsbetriebes geöffnet, der Schalttransistor 6 gesperrt. Der zweite Energiespeicher 8, bei dem es sich vorzugsweise um einen Elektrolytkondensator handelt, ist über den Widerstand R1, der einen Wert von beispielsweise 10 M 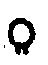 hat, um die Berührschutzbedingungen nach VDE zu erfüllen, und eine Gleichrichterschaltung 9 mit einer Klemme des Wechselstromnetzes verbunden. Die andere Klemme des Wechselstromnetzes liegt über den Widerstand R2, dessen Wert ebenfalls 10 M 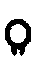 beträgt, an Masse. Durch diesen Anschluß an das Wechselstromnetz wird der zweite Energiespeicher 8 ständig im geladenen Zustand gehalten.

Die Wiedereinschaltung des Fernsehempfängers aus dem Bereitschaftsbetrieb geschieht wie folgt:

Mittels einer Taste des Fernbedienungsgebers 3 wird ein Befehl eingegeben. Dieser wird im Fernbedienungsempfänger 4 empfangen und an die Auswerteschaltung 5 weitergeleitet. Diese wiederum erzeugt an ihrem Ausgang ein Signal hohen Pegels, welches der Basis des Schalttransistors 6, bei welchem es sich um einen Hochvolttransistor handelt, zugeführt wird. In Ansprache auf dieses Signal wird die Kollektor-Emitter-Strecke des Schalttransistors 6 leitend. Dies wiederum bewirkt einen kurzzeitigen hohen Strom durch das Relais 7, da der zweite Energiespeicher 8 über das Relais 7 entladen wird.

Vorzugsweise handelt es sich bei dem Relais 7 um ein bistabiles Relais, welches eine zweipolige Netztrennung bewirkt. Durch den genannten kurzzeitigen Stromfluß wird das Relais 7 in seinen zweiten stabilen Zustand umgeschaltet und dadurch ein nicht gezeichneter Schalter geschlossen, durch welchen das Wechselstromnetz mit den weiteren Bauteilen des Fernsehempfängers, die im Bereitschaftsbetrieb vom Wechselstromnetz getrennt sind, verbunden wird.

Alternativ dazu kann es sich beim Relais 7 auch um ein herkömmliches, nicht bistabiles Relais handeln. In diesem Fall muß jedoch nach dem Einschaltvorgang das Relais mit einem Haltestrom versorgt werden. Dies geschieht über die in der Figur gestrichelt gezeichnete Verbindung. Dazu bewirkt der oben beschriebene kurzzeitige hohe Stromfluß durch das Relais 7 auch ein Schließen des Schalters 11, so daß eine aus dem Netzteil des Fernsehempfängers abgeleitete Gleichspannung von 12 V über den Schalter 11 und die Diode 10 zur Versorgung des Relais 7 zur Verfügung steht.

Mittels des Schalters 12, bei dem es sich vorzugsweise um eine am Gehäuse des Fernsehempfängers angeordnete Taste handelt, ist eine manuelle Einschaltung des Fernsehempfängers möglich. Dies ist insbesondere dann von Vorteil, wenn der erste Energiespeicher 2 die zur Versorgung des Fernbedienungsempfängers 4 und der Auswerteschaltung 5 notwendige Energie aufgrund eines Defekts des Solar-Panels 1 und/oder des Elektrolytkondensators 2 oder einer anderweitig bedingten Entladung des Elektrolytkondensators 2 nicht zur Verfügung stellen kann, so daß ein mittels des Fernbedienungsgebers 3 eingegebener Einschaltbefehl nicht ausgewertet werden kann. Die Möglichkeit, den Fernsehempfänger mittels des Schalters 12 wieder aus dem Bereitschaftsbetrieb in den Normalbetrieb zu überführen, ist auch dann von Vorteil, wenn die Batterie des Fernbedienungsgebers 3 entladen ist und demzufolge der Auswerteschaltung 5 trotz Tastenbetätigung auf dem Fernbedienungsgeber kein Einschaltsignal zugeführt wird.

Gemäß einer nicht gezeichneten alternativen Ausführungsform der Erfindung kann die Ladung des zweiten Energiespeichers 8 ebenfalls über das Solar-Panel 1 erfolgen, so daß eine Verbindung des zweiten Energiespeichers 8 mit dem Wechselstromnetz nicht notwendig ist.

Vorstehend wurde die Erfindung am Beispiel eines Fernsehempfängers beschrieben. Die Erfindung ist jedoch nicht auf dieses Ausführungsbeispiel beschränkt. Die beanspruchte Vorrichtung kann ebenso im Zusammenhang mit anderen Geräten der Unterhaltungselektronik verwendet werden, die fernbedienbar sind und einen Bereitschaftsbetrieb aufweisen, beispielsweise mit Audiogeräten.

## Patentansprüche

1. Vorrichtung zur Stromversorgung eines fernbedienbaren Gerätes der Unterhaltungselektronik im Bereitschaftsbetrieb mit einem Fernbedienungsempfänger (4) und einer mit dem Fernbedienungsempfänger verbundenen Auswerteschaltung (5),
wobei die Stromversorgung des Fernbedienungsempfängers und der Auswerteschaltung im Bereitschaftsbetrieb über einen mit einem Solar-Panel (1) verbundenen ersten Energiespeicher (2) erfolgt und mit einem Relais (7), welches in Ansprache auf ein Ausgangssignal der Auswerteschaltung zur Einschaltung des Gerätes aus dem Bereitschaftsbetrieb eine Umschaltung auslöst, derart, dass im Bereitschaftsbetrieb nicht benötigte Baugruppen des Gerätes mit dem Wechselstromnetz verbunden werden,
**dadurch gekennzeichnet, dass**
das Relais (7) mit dem Ausgang der Auswerteschaltung (5) über einen Schalttransistor (6) verbunden ist, und das Relais (7) weiterhin mit einem zweiten Energiespeicher (8) verbunden ist, welcher in Ansprache auf das Ausgangssignal der Auswerteschaltung (5) zum Wiedereinschalten des Gerätes aus dem Bereitschaftsbetrieb über den sich im leitenden Zustand befindlichen Schalttransistor (6) und das Relais (7) entladen wird.

2. Vorrichtung nach Anspruch 1,
**dadurch gekennzeichnet, dass**
das Solar-Panel (1) mit den Gehäuse des Gerätes fest verbunden ist.

3. Vorrichtung nach Anspruch 1,
**dadurch gekennzeichnet, dass**
das Solar-Panel (1) in Form eines beweglichen Geräteeinschubs realisiert ist.

4. Vorrichtung nach Anspruch 1,
**dadurch gekennzeichnet, dass**
das Solar-Panel (1) durch ein Kabel mit dem Gerät verbunden ist.

5. Vorrichtung nach einem oder mehreren der vorhergehenden Ansprüche,
**dadurch gekennzeichnet, dass**
der erste Energiespeicher (2) ein Elektrolytkondensator ist.

6. Vorrichtung nach einem oder mehreren der Ansprüche 1 bis 4,
**dadurch gekennzeichnet, dass**
der erste Energiespeicher (1) ein Akkumulator ist.

7. Vorrichtung nach einem oder mehreren der vorhergehenden Ansprüche,
**dadurch gekennzeichnet, dass**
der mit dem Relais (7) verbundene zweite Energiespeicher (8) ein Elektrolytkondensator ist.

8. Vorrichtung nach Anspruch 7,
**dadurch gekennzeichnet, dass**
der mit dem Relais (7) verbundene zweite Energiespeicher (8) über eine Gleichrichterschaltung (9) und einem Ohmschen Widerstand (R1), der einen die VDE-Berührschutzbedingungen erfüllenden Wert hat, mit dem Wechselstromnetz verbunden ist.

9. Vorrichtung nach Anspruch 7,
**dadurch gekennzeichnet, dass**
die Stromversorgung des mit dem Relais (7) verbundenen zweiten Energiespeichers (8) über das Solar-Panel (1) erfolgt.

10. Vorrichtung nach einem oder mehreren der vorhergehenden Ansprüche,
**dadurch gekennzeichnet, dass**
das Relais (7) ein bistabiles Relais ist.

11. Vorrichtung nach einem oder mehreren der Ansprüche 1 bis 10,
**dadurch gekennzeichnet, dass**
das Relais (7) ein nicht bistabiles Relais ist, welches nach dem Einschalten des Gerätes aus dem Bereitschaftsbetrieb mittels einer aus der Wechselstromnetz abgeleiteten Gleichspannung (12 V) versorgt wird.

12. Vorrichtung nach einem oder mehreren der vorhergehenden Ansprüche,
**dadurch gekennzeichnet, dass**
das Relais (7) im Bereitschaftsbetrieb eine zweipolige Netztrennung bewirkt.

13. Vorrichtung nach einem oder mehreren der vorhergehenden Ansprüche,
**dadurch gekennzeichnet, dass**
die Vorrichtung weiterhin einen manuell betätigbaren, mit dem Relais (7) verbundenen Schalter (12) aufweist, mittels dessen das Relais (7) zur Einschaltung des Gerätes aus dem Bereitschaftsbetrieb ansteuerbar ist.

14. Vorrichtung nach einem oder mehreren der vorhergehenden Ansprüche,
**dadurch gekennzeichnet, dass**
die Vorrichtung in einem Femsehempfänger angeordnet ist.

## Claims

1. Power-supply device of a remote-controllable entertainment-electronics appliance in the standby mode, comprising a remote-control receiver (4) and an evaluation circuit (5) connected to the remote-control receiver, wherein the power supply to the remote-control receiver and of the evaluation circuit in the standby mode takes place via a first energy store (2) connected to a solar panel (1), and comprising a relay (7) that, in response to an output signal of the evaluation circuit to switch on the appliance from the standby mode, triggers a switching in such a way that assemblies of the appliance not required in the standby mode are connected to the alternating-current mains, **characterized in that** the relay (7) is connected to the output of the evaluation circuit (5) via a switching transistor (6), and the relay (7) is furthermore connected to a second energy store (8) that, in response to the output signal of the evaluation circuit (5) is discharged to switch on the appliance again from the standby mode via the switching transistor (6) which is in the conducting state and the relay (7).

2. Device according to Claim 1, **characterized in that** the solar panel (1) is permanently connected to the casing of the appliance.

3. Device according to Claim 1, **characterized in that** the solar panel (1) is constructed in the form of a portable appliance insert.

4. Device according to Claim 1, **characterized in that** the solar panel (1) is connected to the appliance by a cable.

5. Device according to one or more of the preceding claims, **characterized in that** the first energy store (2) is an electrolytic capacitor.

6. Device according to one or more of Claims 1 to 4, **characterized in that** the first energy store (1) is a storage battery.

7. Device according to one or more of the preceding claims, **characterized in that** the second energy store (8) connected to the relay (7) is an electrolytic capacitor.

8. Device according to Claim 7, **characterized in that** the second energy store (8) connected to the relay (7) is connected to the alternating-current mains via a rectifier circuit (9) and an ohmic resistor (R1) that has a value fulfilling the VDE shock-protection conditions.

9. Device according to Claim 7, **characterized in that** the power supply to the second energy store (8) connected to the relay (7) takes place by means of the solar panel (1).

10. Device according to one or more of the preceding claims, **characterized in that** the relay (7) is a bistable relay.

11. Device according to one or more of Claims 1 to 10, **characterized in that** the relay (7) is a non-bistable relay that is supplied by means of a direct voltage (12V) derived from the alternating-current mains after the appliance is switched on from the standby mode.

12. Device according to one or more of the preceding claims, **characterized in that** the relay (7) effects a two-pole mains isolation in the standby mode.

13. Device according to one or more of the preceding claims, **characterized in that** the device furthermore has a manually actuable switch (12) that is connected to the relay (7) and by means of which the relay (7) can be driven to switch on the appliance from the standby mode.

14. Device according to one or more of the preceding claims, **characterized in that** the device is disposed in a television receiver.

## Revendications

1. Dispositif d'alimentation en courant d'un appareil électronique de divertissement pouvant être télécommandé à l'état de veille, équipé d'un récepteur de télécommande (4) et d'un circuit d'évaluation (5) relié au récepteur de télécommande, l'alimentation en courant du récepteur de télécommande et du circuit d'évaluation à l'état de veille s'effectuant par l'intermédiaire d'un premier accumulateur d'énergie (2) relié à un panneau solaire (1) et d'un relais (7), qui en réponse à un signal de sortie du circuit d'évaluation en vue de la mise en marche de l'appareil à partir de l'état de veille, déclenche une commutation de telle sorte que des ensembles de l'appareil non nécessaires dans l'état de veille sont reliés au réseau de courant alternatif,
**caractérisé en ce que**
le relais (7) est relié à la sortie du circuit d'évaluation (5) par l'intermédiaire d'un transistor de commutation (6), et le relais (7) est relié en outre à un second accumulateur d'énergie (8), qui en réponse au signal de sortie du circuit d'évaluation (5) en vue de la remise en marche de l'appareil à partir de l'état de veille, est déchargé par l'intermédiaire du transistor de commutation (6) se trouvant à l'état conducteur et du relais (7).

2. Dispositif selon la revendication 1, **caractérisé en ce que** le panneau solaire (1) est solidaire du boîtier de l'appareil.

3. Dispositif selon la revendication 1, **caractérisé en ce que** le panneau solaire (1) est réalisé sous la forme d'un tiroir d'appareil mobile.

4. Dispositif selon la revendication 1, **caractérisé en ce que** le panneau solaire (1) est relié à l'appareil par un câble.

5. Dispositif selon l'une ou plusieurs des revendications précédentes, **caractérisé en ce que** le premier accumulateur d'énergie (2) est un condensateur électrolytique.

6. Dispositif selon une ou plusieurs des revendications1 à 4, **caractérisé en ce que** le premier accumulateur d'énergie (2) est un accumulateur.

7. Dispositif selon une ou plusieurs des revendications précédentes, **caractérisé en ce que** le second accumulateur d'énergie (8) relié au relais (7) est un condensateur électrolytique.

8. Dispositif selon la revendication 7, **caractérisé en ce que** le second accumulateur d'énergie (8) relié au relais (7) est relié au réseau de courant alternatif par l'intermédiaire d'un circuit redresseur (9) et d'une résistance ohmique (R1), qui présente une valeur remplissant les conditions de protection contre un contact selon les normes VDE.

9. Dispositif selon la revendication 7, **caractérisé en, ce que** l'alimentation en courant du second accumulateur d'énergie (8) relié au relais (7) s'effectue par l'intermédiaire du panneau solaire (1).

10. Dispositif selon une ou plusieurs des revendications précédentes, **caractérisé en ce que** le relais (7) est un relais bistable.

11. Dispositif selon une ou plusieurs des revendications 1 à 10, **caractérisé en ce que** le relais (7) est un relais non bistable, qui est alimenté après la mise en marche de l'appareil à partir de l'état de veille à l'aide d'une tension continue (12 V) prélevée sur le réseau de courant alternatif.

12. Dispositif selon une ou plusieurs des revendications précédentes, **caractérisé en ce que** le relais (7) provoque une séparation bipolaire du réseau dans l'état de veille.

13. Dispositif selon une ou plusieurs des revendications précédentes, **caractérisé en ce que** le dispositif comporte en outre un commutateur (12) actionnable manuellement, relié au relais (7), au moyen duquel le relais (7) peut être commandé en vue de la mise en marche de l'appareil à partir de l'état de veille.

14. Dispositif selon une ou plusieurs des revendications précédentes, **caractérisé en ce que** le dispositif est disposé dans un téléviseur.
